# EUROPÄISCHE PATENTSCHRIFT

(11) **EP 1 373 037 B1**
(45) Veröffentlichungstag und Bekanntmachung des Hinweises auf die Patenterteilung: **29.09.2004**
(21) Anmeldenummer: 02722168.8
(22) Anmeldetag: 02.03.2002
(51) Int. Cl.: B60T 8/00, B62D 6/00, B62D 101/00

(54) **LENKHILFEVERFAHREN UND LENKHILFESYSTEM BEI EINEM KRAFTFAHRZEUG**
POWER-ASSISTED STEERING METHOD AND POWER-ASSISTED STEERING SYSTEM FOR A MOTOR VEHICLE
PROCEDE D'ASSISTANCE DE DIRECTION ET SYSTEME D'ASSISTANCE DE DIRECTION POUR AUTOMOBILE

(30) Priorität: 30.03.2001 DE 10115809
(43) Veröffentlichungstag der Anmeldung: 02.01.2004
(73) Patentinhaber: Bayerische Motoren Werke Aktiengesellschaft, 80809 München (DE)
(72) Erfinder: BAUMGARTEN, Goetz, 85757 Karlsfeld (DE)
(86) Internationale Anmeldenummer: PCT/EP2002/002275
(87) Internationale Veröffentlichungsnummer: WO 2002/079012

(56) Entgegenhaltungen:
- EP-A- 0 943 515
- EP-A- 1 000 838
- DE-A- 4 305 155
- DE-A- 19 632 251
- DE-A- 19 749 005

## Beschreibung

Die Erfindung betrifft ein Lenkhilfeverfahren und ein Lenkhilfesystem für ein Kraftfahrzeug mit einer Lenkvorrichtung für die Eingabe einer Lenkvorgabegröße durch einen Fahrer, mit mehreren Fahrsensoren für das Erfassen von Fahrdynamikgrößen, mit einem Lenkregelsystem, durch das der Lenkvorgabegröße eine Lenkregelgröße überlagert wird, die in Abhängigkeit von den Ausgangsgrößen der mehreren Fahrsensoren ermittelt wird, sowie mit zumindest einem weiteren das Fahrverhalten des Kraftfahrzeugs beeinflussenden Regelsystem, das eine Information aus dem Lenkregelsystem verwertet, wobei dieses weitere Regelsystem insbesondere ein Bremsregelsystem zum Stabilisieren der Fahrzeugstabilität durch Abbremsen einzelner Fahrzeugräder ist.Ein gattungsgemäßes System ist aus der EP- A-0 943 515 bekannt.

In zukünftigen Serienfahrzeugen sollen zusätzlich zu den heute üblichen Bremsregelsystemen (dynamische Stabilitätskontrolle DSC) auch Regelsysteme eingesetzt werden, die über einen Lenkeingriff arbeiten und im weiteren als Lenkregelsysteme bezeichnet werden. Derartige Lenkregelsysteme können entweder zur Lenkeingabe des Fahrers einen zusätzlichen Lenkwinkel addieren bzw. überlagern (Überlagerungslenkung ÜL) oder aber den Vorderradlenkwinkel nur nach einem rein rechnerisch bestimmten Stellkommando einstellen (steer-by-wire- System SBW). Während eine sog. Überlagerungslenkung noch eine mechanische Lenksäule aufweist, ist die mechanische Lenksäule bei einem SBW-System nicht mehr vorgesehen.

Sowohl bei den bekannten Bremsregelsystemen als auch als auch bei den genannten Lenkregelsystemen wirken quasi zwei Regelungskreise gleichzeitig auf die Fahrzeugquerdynamik ein Dadurch kann es durch ihre Rückkopplungspfade zu gegenseitigen Beeinflussungen des Lenkregelsystems und des Brems-Regelsystems kommen. Diese gegenseitige Beeinflussung des Lenkregelsystems und des Bremsregelsystems kann jedoch zu unerwünschten Bremseingriffen führen.

Gleiches gilt, wenn neben dem Lenkregelsystem anstelle des Bremsregelsystems oder zusätzlich zu diesem ein weiteres (hier nicht näher ausgeführtes) Regelsystem im Kraftfahrzeug vorgesehen ist, das das Fahrverhalten des Kraftfahrzeugs beeinflussen kann und das hierzu nicht nur auf zumindest einen der genannten Fahrsensoren für das Erfassen von Fahrdynamikgrößen zugreift, sondern weiterhin auch Informationen aus dem Lenkregelsystem erhält bzw. derartige Informationen berücksichtigt oder verwertet Auch hier kann es zu unerwünschten Regeleingriffen dieses weiteren Regelsystems kommen, wenn sich die Rückkopplungspfade dieses weiteren Regelsystems und des genannten Lenkregelsystems gegenseitig beeinflussen.

Es ist Aufgabe der vorliegenden Erfindung, ein Verfahren anzugeben, mit dem die genannten störenden Bremseingriffe bzw. allgemein Eingriffe durch das genante weitere Regelsystem reduziert oder vermieden werden, wenn das Lenkregelsystem aktiv ist bzw. dessen Eingriffe zur Erzielung eines gewünschten Fahrverhaltens des Kraftfahrzeugs ausreichen. Ferner soll eine entsprechende geeignete Vorrichtung geschaffen werden.

Zur Lösung dieser Aufgabe ist vorgesehen, dass das weitere Regelsystem aus dem Lenkregelsystem die mit der Lenkregelgröße überlagerte Lenkvorgabegröße verwertet. Insbesondere soll das Abbremsen einzelner Fahrzeugräder des Kraftfahrzeugs durch das genannte Bremsregelsystem in Abhängigkeit von der mit der Lenkregelgröße überlagerten Lenkvorgabegröße erfolgen. Vorteilhafte Aus- und Weiterbildungen der Erfindung sind Gegenstand der weiteren Unteransprüche.

Der Lösung gemäß der Erfindung liegt die folgende Überlegung zugrunde. Betrachtet man die für das Verhalten der Regelungsysteme entscheidenden querdynamischen Signalflüsse, so stellt man fest, dass die für das Bremsregelsystem (bspw. DSC) wichtige Eingangsgröße der Fahrerlenkeingabe in diesem Bremsregelsystem (DSC) einerseits als Kurswunsch des Fahrers und andererseits als Größe zur Ermittelung des Vorderradwinkels interpretiert wird. Wird die Fahrerlenkeingabe jedoch nachträglich noch durch den Lenkeingriff einer überlagerungslenkung oder eines steer-by-wire-Systems verändert, so dass der feste, von der Fahrzeugquerdynamik unabhängige Zusammenhang zwischen Fahrerlenkeingabe und Vorderradwinkel gestört wird, so berücksichtigt das Bremsregelsystem (DSC) diesen Lenkeingriff nicht, d.h. ausgeführte Bremseingriffe durch das Bremsregelsystem sind nicht optimiert.

Erfindungsgemäß wird daher dem Bremsregelsystem oder allgemein einem neben dem Lenkregelsystem weiteren Regelsystem, das das Fahrverhalten des Kraftfahrzeugs beeinflussen kann, nicht die Fahrerlenkeingabe, sondern ein "effektiver Lenkwinkel" als Eingangsgröße zugeführt. D.h. die Regelkreise werden entflochten. Ein "effektiver Lenkwinkel" ist hier und im folgenden eine "Lenkvariable", die über ein mechanisches Getriebe direkt mit dem Vorderradlenkwinkel zusammenhängt und somit genauso bestimmend ist für die Fahrzeugreaktion auf eine Lenkeingabe wie der Vorderradlenkwinkel selbst. Der "effektive Lenkwinkel" kann zum Beispiel der Ausgang des Überiagerungsgetriebes oder die Verschiebung der Zahnstange im Lenkgetriebe sein.

Das erfindungsgemäße Lenkhilfeverfahren und -system für ein Kraftfahrzeug mit einer Lenkvorrichtung für die Eingabe einer Lenkvorgabegröße durch einen Fahrer, mehreren Fahrsensoren für das Erfassen von Fahrdynamikgrößen, einem Bremsregelsystem zum Stabilisieren der Fahrzeugstabilität durch Abbremsen einzelner Fahrzeugräder und einem Lenkregelsystem, durch das der Lenkvorgabegröße eine Lenkregelgröße überlagert wird, die in Abhängigkeit von den Ausgangsgrößen der mehreren Fahrsensoren ermittelt wird, ist gekennzeichnet durch das Abbremsen einzelner Fahrzeugräder durch das Bremsregelsystem in Abhängigkeit von der mit der Lenkregelgröße überlagerten Lenkvorgabegröße bzw dadurch, dass das Bremsregelsystem durch die mit der Lenkregelgröße überlagerte Lenkvorgabegröße angesteuert wird. Anstelle des Bremsregelsystems oder neben diesem kann im übrigen auch hier - wie bereits weiter oben erläutert wurde - ein weiteres (allgemeines) Regelsystem vorgesehen sein, das auf das Fahrverhalten des Kraftfahrzeugs einen Einfluss hat und insbesondere dessen Fahrdynamik stabilisiert, und das hierzu nicht nur auf zumindest einen der genannten Fahrsensoren für das Erfassen von Fahrdynamikgrößen zugreift, sondern weiterhin auch Informationen aus dem Lenkregelsystem erhält bzw. derartige Informationen berücksichtigt oder verwertet.

Bei einer bevorzugten Ausführungsform der Erfindung ist die Lenkvorgabegröße ein Lenksollwinkel und die Lenkregelgröße ein in Abhängigkeit von den Ausgangsgrößen der mehreren Fahrsensoren rechnerisch bestimmter Lenkänderungswinkel. Bei einer weiteren bevorzugten Ausführungsform der Erfindung ist die Lenkvorgabegröße ein Lenksolldrehmoment und die Lenkregelgröße ein Lenkzusatzdrehmoment, das über ein Überlagerungsgetriebe dem Lenksolldrehmoment überlagert wird.

Es sei noch erwähnt, dass es grundsätzlich noch eine weitere Lösungsmöglichkeit für die der vorliegenden Erfindung zugrunde liegende Aufgabe gibt, die darin besteht, dass das gesamte Regelungssystem mit den einzelnen sog. Unter-Systemen (Lenkregelsystem, Bremsregelsystem, weiteres Regelsystem) vollständig neu entwickelt wird, jedoch ist eine solche Neuentwicklung mit erheblichem Zeit- und Kostenaufwand verbunden. Dies ist bei Umsetzung der vorliegenden Erfindung nicht zu befürchten.

Vorteilhafterweise bleibt mit der vorliegenden Erfindung die funktionale Modularität der Algorithmen für die Überlagerungslenkung oder ein steer-by-wire-System, sowie für ein Bremsregelsystem und/oder zumindest ein weiteres genanntes Regelsystem erhalten. Das heißt, dass die Algorithmen dieser einzelnen Systeme nicht neu entwickelt oder erweitert öder strukturell verändert werden müssen. Eine Neuapplikation wie z. B. bei der Vemetzung der Überlagerungslenkung mit einem Bremsregelsystem oder dgl. reicht völlig aus. Dies wiederum spart Entwicklungskosten und Entwicklungszeit ein. Die vorliegende Erfindung bietet daher auch eine wirksame Begrenzung der Komplexität bei solchen Vernetzungen und hat hierdurch vielfältigste positive Auswirkungen auf den gesamten Entwicklungsprozeß bezüglich Zeit, Kosten und Aufwand.

Vorteilhafterweise können (jedoch müssen nicht) die genannten Algorithmen der einzelnen Regelsysteme weiterhin in getrennten Steuergeräten ablaufen, was günstig ist für die Austauschbarkeit von zugelieferten Systemen bzw. deren elektronischer Steuergeräte. Dann hat ein möglicher Steuergeräteausfall nicht den Ausfall des Gesamt-Systems zur Folge, sondern nur derjenigen Regelsystem, die in diesem defekten Steuergerät laufen. Im Sinne eines Baukastensystems ist darüberhinaus eine vorteilhafte Variantenbeherrschung gegeben, denn die jeweiligen Einzelsysteme können quasi individuell hinzugenomen oder weggelassen werden.

Im weiteren wird die Erfindung anhand zweier bevorzugter Ausführungsformen beschrieben, wobei für das weitere, neben einem Lenkregelsystem vorgesehene Regelsystem lediglich ein Bremsregelsystem beschrieben ist. Alternativ oder parallel zu diesem könnte jedoch auch ein anderes oder weiteres Regelsystem vorgesehen sein, das das Fahrverhalten des Kraftfahrzeugs beeinflussen kann und das hierzu nicht nur auf zumindest einen der genannten Fahrsensoren für das Erfassen von Fahrdynamikgrößen zugreift, sondern weiterhin auch Informationen aus dem Lenkregelsystem erhält bzw. derartige Informationen berücksichtigt oder verwertet. Dabei zeigt
- Fig.1: ein Überlagerungslenksystem nach dem Stand der Technik,
- Fig.2: eine Ausführungsform eines erfindungsgemäßen Überlagerungslenksystems.
- Fig.3: ein steer-by-wire-System nach dem Stand der Technik, sowie
- Fig.4: eine Ausführungsform eines erfindungsgemäßen steer-by-wire-Systems.

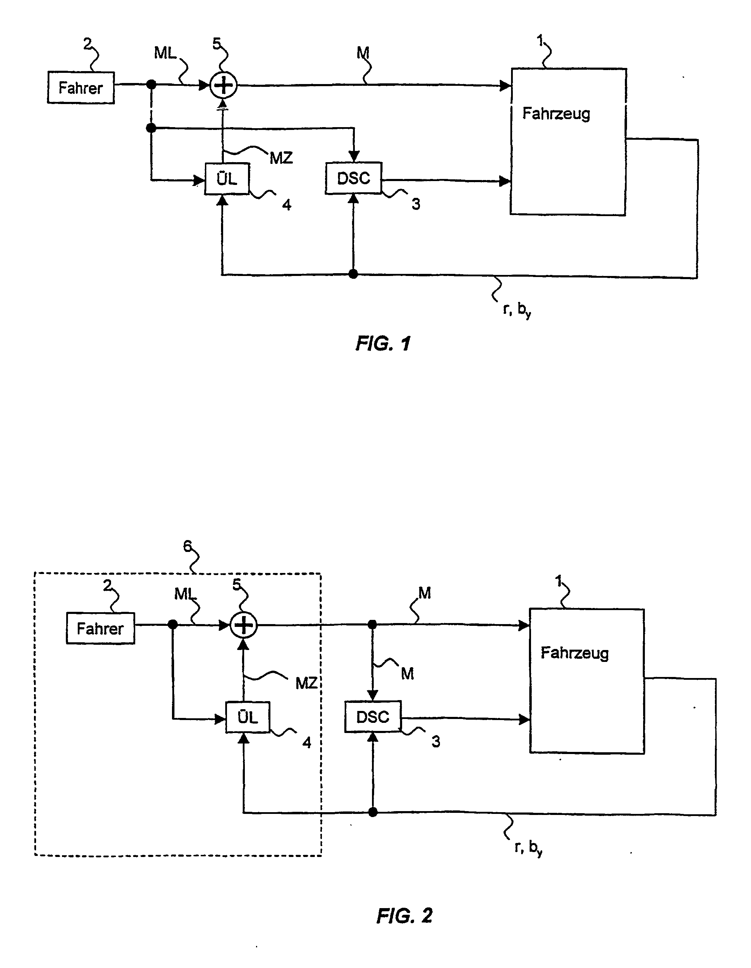

In Fig. 1 ist ein Kraftfahrzeug 1 mit einer (nicht dargestellten) Lenkvorrichtung für die Eingabe einer Lenkvorgabe durch einen Fahrer 2 gezeigt. Mehrere (nicht dargestellte) Fahrsensoren für das Erfassen von Fahrdynamikgrößen wie Fahrgeschwindigkeit, Querbescheunigung by, Gierrate r etc. sind in dem Fahrzeug vorgesehen, bei dem die Erfindung anwendbar ist. Diese Fahrdynamikgrößen werden bei Eingriffen von Hitfssystemen zur Stabilisierung des Fahrzeugs in kritischen Situationen berücksichtigt. So weist das Fahrzeug nach Fig. 1 ein Bremsregelsystem 3 und ein Lenkregelsystem 4 auf, bei denen neben der Lenkvorgabe des Fahrers 2 die von den Fahrsensoren des Fahrzeugs ausgegebenen Werte für die Querbescheunigung by und die Gierrate r als Eingangsgrößen verwendet werden.

Das Bremsregelsystem 3 dient dazu, die Fahrzeugstabilität durch Abbremsen einzelner Fahrzeugräder 7 unter Zuhilfenahme von r und by zu erhöhen, so dass die Fahrsicherheit aufrechterhalten wird. Neben den Werten von by und r wird die Lenkvorgabe des Fahrers berücksichtigt.

Bei dem in Fig. 1 schematisch dargestellten Fahrzeugsystem ist das Lenkregelsystem 4 eine Überlagerungslenkung, die mit ÜL bezeichnet ist, die in Abhängigkeit von dem Lenkdrehmoment ML des Fahrers über ein Überlagerungsgetriebe 5 diesem Lenkdrehmoment ML ein Zusatzdrehmoment MZ überlagert, so dass das tatsächlich auf die gelenkten Räder wirkende effektive Lenkdrehmoment M resultiert. Bei der Bestimmung des erforderlichen Lenkzusatzdrehmoments MZ werden die Werte für die Querbeschleunigung by und die Gierrate r berücksichtigt. Die Werte für die Querbeschleunigung by und die Gierrate r stellen also neben dem Lenkdrehmoment ML des Fahrers 2 Eingangsgrößen des Lenkregelsystems 4 dar. Das Lenkzusatzdrehmoment MZ kann dazu dienen, den Lenkwinkel des Fahrzeugs zu korrigieren, wenn aufgrund der Werte der Fahrsensoren festgestellt wird, dass sich die Fahrstabilität verschlechtert: das Fahrzeug beginnt beispielsweise zu schleudern, und durch das Lenkregelsystem 4 wird gegengesteuert.

Bei den Fahrzeugen, die sowohl über ein Lenkregelsystem 4 als auch ein Bremsregelsystem 3 verfügen, kann es zu einer gegenseitigen Beeinflussung des Lenkregelsystems und des Bremsregelsystems und damit zu (von der Steuerung für die Fahrsicherheit als notwendig angesehenen) unvorhergesehenen Bremseingriffen des Bremsregelsystems 3 kommen. Da das Bremsregelsystem 3 jedoch nicht das aktuelle effektive Lenkdrehmoment M vorliegen hat, sondern - unter Berücksichtigung der Werte für die Querbeschleunigung by und die Gierrate r - direkt von dem Lenkdrehmoment ML des Fahrers 2 ausgeht, können die Eingriffe des Bremsregelsystems überflüssig oder sogar kontraproduktiv sein.

Damit derartige Bremseingriffe durch das Bremsregelsystem 3 bei gleichzeitig aktivem Lenkregelungssystem ausgeschlossen sind, wird das Bremsregelsystem 3 erfindungsgemäß von einer effektiven Lenkgröße (effektiver Lenkwinkel) angesteuert und nicht mehr direkt von einer Lenkvorgabegröße, die durch den Fahrer 2 eingegeben wird. Dies bedeutet, dass in dem effektiven Lenkdrehmoment M, das Eingangsgröße des Bremsregelsystems 3 ist, das Lenkzusatzdrehmoment MZ bereits eingeflossen ist. Das Abbremsen einzelner Fahrzeugräder durch das Bremsregelsystem 3 erfolgt also in Abhängigkeit von der mit der Lenkregelgröße MZ überlagerten Lenkvorgabegröße ML.

Das entsprechende schematische Blockdiagramm ist in Fig. 2 dargestellt. Elemente mit der gleichen Bedeutung sind in Fig. 1 und Fig. 2 mit denselben Bezugszeichen versehen.

Obgleich das Blockdiagramm in Fig. 2 dieselben Elemente wie in Fig. 1 aufweist, ist ihre logische Zuordnung in Fig. 1 und in Fig. 2 unterschiedlich. In Fig. 2 werden die Elemente Fahrer 2, Überlagerungslenkung 4 mit Überlagerungsgetriebe 5 zu einem "virtuellen" Fahrer 6 zusammengefasst. Dieser "virtuelle" Fahrer 6 übt auf die gelenkten Räder des Fahrzeugs 1 ein Lenkdrehmoment aus, das das effektive Lenkdrehmoment M ist, das auf die gelenkten Räder wirkt. Dieses effektive Lenkdrehmoment M wird in das Bremssystem 3 als Eingangsgröße eingespeist. Aufgrund dieses Lenkdrehmoments M wird- unter Berücksichtigung der Werte für die Querbeschleunigung b_{y} und die Gierrate r - ein Bremseingriff durch das Bremssystem 3 gesteuert, nicht mehr aufgrund der direkten Fahrereingabe.

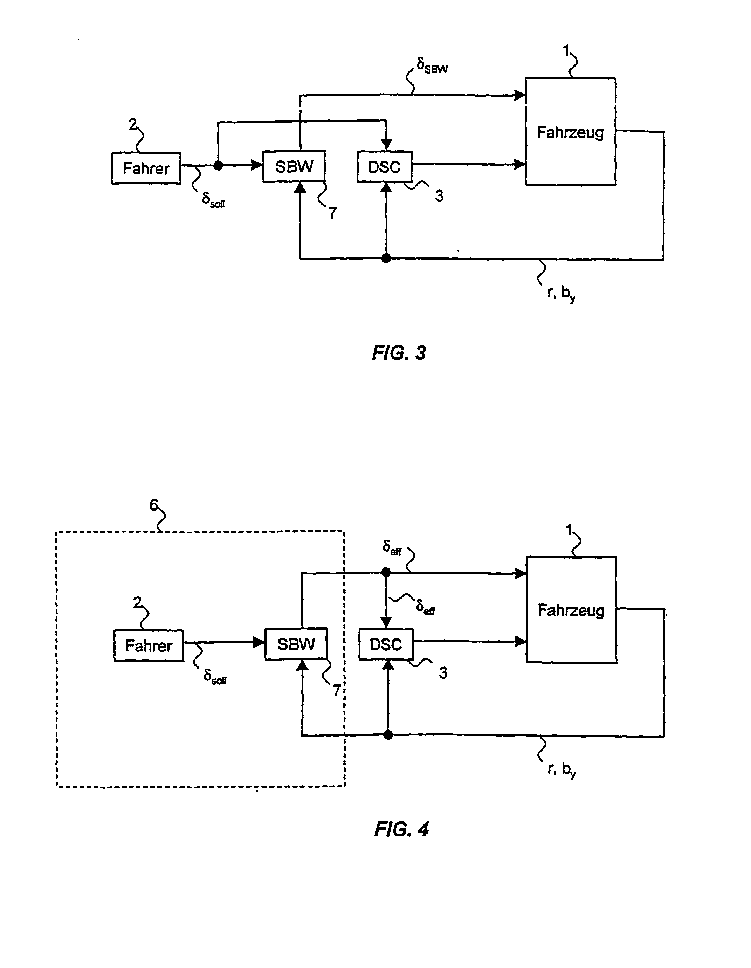

Die Erfindung ist nicht auf Überlagerungslenksysteme beschränkt, sondern ist auch anwendbar bei steer-by-wire-Systemen (SBW-Systemen). Im Falle eines SBW-Systems lässt sich die logische Verknüpfung wie in Fig. 3 darstellen.

Bei dem in Fig. 3 schematisch dargestellten Fahrzeugsystem mit Fahrzeug 1 ist das Lenkregelsystem ein SBW-System 7, das in Abhängigkeit von einer Lenkwinkelvorgabe δₛₒₗₗ des Fahrers 2 die Räder des Fahrzeugs 1 lenkt. Bei der Bestimmung des von dem SBW-System 7 an das Fahrzeug 1 ausgegebenen Lenkwinkels δ_{SBW} werden die Werte für die Querbeschleunigung b_{y} und die Gierrate r berücksichtigt. Die Werte für die Querbeschleunigung b_{y} und die Gierrate r stellen also neben dem Lenkvorgabewinket δₛₒₗₗ Eingangsgrößen des SBW-Lenkregelsystems 4 dar. Der Lenkwinkel δ_{SBW} weicht von dem Lenkvorgabewinkel δₛₒₗₗ ab, wenn aufgrund der Werte der Fahrsensoren festgestellt wird, dass sich die Fahrstabilität verschlechtert.

Auch bei Fahrzeugen mit einem SBW-System 7 kann es zu einer gegenseitigen Beeinflussung des SBW-Lenkregelsystems 7 und des Bremsregelsystems 3 und damit zu (von der Steuerung für die Fahrsicherheit als notwendig angesehenen) unvorhergesehenen Bremseingriffen des Bremsregelsystems 3 kommen. Da das Bremsregelsystem 3 nicht den aktuellen Lenkwinkel δ_{SBW} vorliegen hat, sondern - unter Berücksichtigung der Werte für die Querbeschleunigung b_{y} und die Gierrate r - direkt von der Lenkwinkelvorgabe δₛₒₗₗ des Fahrers 2 ausgeht, können die Eingriffe des Bremsregelsystems überflüssig oder sogar kontraproduktiv sein.

Durch die erfindungsgemäße Neugruppierung der Elemente nach Fig. 3 ergibt sich die Vernetzung nach Fig. 4. Elemente mit der gleichen Bedeutung sind in Fig. 3 und Fig. 4 mit denselben Bezugszeichen versehen.

Die logische Zuordnung der Elemente in dem Blockdiagramm in Fig. 4 unterscheidet sich von der in Fig. 3. In Fig. 4 werden die Elemente Fahrer 2 und SBW-System 7 zu einem "virtuellen" Fahrer 6 zusammengefasst. Dieser "virtuelle" Fahrer 6 gibt eine Lenkwinkelvorgabe δₛₒₗₗ) aus. Der Lenkvorgabewinkel δₛₒₗₗ wird in das SBW-System eingespeist, das unter Berücksichtigung der Werte für die Querbeschleunigung b_{y} und die Gierrate r und anderer Größen daraus einen effektiven Lenkwinkels δ_{eff} erzeugt. Dieser wird einerseits an das Fahrzeug 1 zur Umsetzung der (modifizierten) Lenkvorgabe ausgegeben und andererseits in das Bremssystem 3 als Eingangsgröße eingespeist Aufgrund des effektiven Lenkwinkels δ_{eff} wird durch das Bremssystem 3 ein Bremseingriff initiiert, nicht mehr aufgrund der direkten Fahrereingabe, d.h. der Lenkwinkelvorgabe δₛₒₗₗ.

Das Lenkhilfesystem für die Umsetzung des oben beschriebenen Verfahrens weist Mittel auf, um das Bremsregelsystem 3 durch die mit der Lenkregelgröße MZ bzw. δ_{SBW} überlagerte Lenkvorgabegröße ML bzw. δₛₒₗₗ ansteuern zu können.

Im Fall der Überlagerungslenkung 4 ist die Lenkvorgabegröße ein über eine mechanische Lenksäule übertragenes Lenksolldrehmoment ML und die Lenkregelgröße ein Winkel, der durch das Lenkzusatzdrehmoment MZ zusätzlich ausgeübt wird. Im Fall des SBW-Systems 7 ist die Lenkvorgabegröße ein Lenksollwinkel δₛₒₗₗ, und der Lenkänderungswinkel δ_{eff} wird aus dem Lenksollwinkel δₛₒₗₗ und den Ausgangsgrößen der mehreren Fahrsensoren, nämlich der Querbeschleunigung b_{y} und der Gierrate r, rechnerisch als Lenkgröße bestimmt.

Im Falle der Überlagerungslenkung in Vernetzung mit einem DSC spiegelt sich wider, dass alles, was die Überiagerungslenkung lenkt, auch ein Fahrer ohne Überlagerungslenkung durch seine Lenkeingabe erzeugen könnte. Dann würde die Fahrerlenkeingabe dem Summenlenkwinkel gleichen. Aus Sicht des DSC sind damit die Fahrerlenkeingabe und das Lenkregelungssystem nicht mehr unterscheidbar und sind zusammen durch den effektiven Lenkwinkel wie ein "modifizierter" oder "virtueller" Fahrer zu sehen.

## Patentansprüche

1. Lenkhilfeverfahren für ein Kraftfahrzeug (1) mit einer Lenkvorrichtung für die Eingabe einer Lenkvorgabegröße (ML, δₛₒₗₗ) durch einen Fahrer (2), mit mehreren Fahrsensoren für das Erfassen von Fahrdynamikgrößen, mit einem Lenkregelsystem (4, 7), durch das der Lenkvorgabegröße (ML, δₛₒₗₗ) eine Lenkregelgröße (MZ, δ_{SBW}) überlagert wird, die in Abhängigkeit von den Ausgangsgrößen der mehreren Fahrsensoren ermittelt wird, sowie mit zumindest einem weiteren das Fahrverhalten des Kraftfahrzeugs beeinflussenden Regelsystem, das eine Information aus dem Lenkregelsystem verwertet, wobei dieses weitere Regelsystem insbesondere ein Bremsregelsystem (3) zum Stabilisieren der Fahrzeugstabilität durch Abbremsen einzelner Fahrzeugräder ist,
**dadurch gekennzeichnet, dass** das weitere Regelsystem aus dem Lenkregelsystem die mit der Lenkregelgröße (MZ, δ_{SBW}) überlagerte Lenkvorgabegröße (ML, δₛₒₗₗ) verwertet.

2. Lenkhilfeverfahren nach Anspruch 1,
**dadurch gekennzeichnet, dass** das Abbremsen einzelner Fahrzeugräder durch das Bremsregelsystem (3) in Abhängigkeit von der mit der Lenkregelgröße (MZ, δ_{SBW}) überlagerten Lenkvorgabegröße (ML, δₛₒₗₗ) erfolgt.

3. Lenkhilfeverfahren nach Anspruch 1 oder 2 ,
**dadurch gekennzeichnet, dass** die Lenkvorgabegröße (ML, δₛₒₗₗ) ein Lenksollwinkel (δₛₒₗₗ) ist und die Lenkregelgröße (MZ, δ_{SBW}) ein in Abhängigkeit von dem Lenksoltwinkel (δₛₒₗₗ) und den Ausgangsgrößen (b_{y}, r) der mehreren Fahrsensoren rechnerisch bestimmter Lenkänderungswinkel (δ_{eff}) ist.

4. Lenkhilfeverfahren nach Anspruch 1 oder 2,
**dadurch gekennzeichnet, dass** die Lenkvorgabegröße (ML, δₛₒₗₗ) ein Lenksolldrehmoment (ML) ist und die Lenkregelgröße (MZ, δ_{SBW}) ein Lenkzusatzdrehmoment (MZ) ist, das über ein Überlagerungsgetriebe (5) dem Lenksolldrehmoment (ML) überlagert wird.

5. Lenkhilfesystem für ein Kraftfahrzeug (1) mit einer Lenkvorrichtung für die Eingabe einer Lenkvorgabegröße (ML, δₛₒₗₗ) durch einen Fahrer (2), mit mehreren Fahrsensoren für das Erfassen von Fahrdynamikgrößen, mit einem Lenkregelsystem (4, 7), durch das der Lenkvorgabegröße (ML, δₛₒₗₗ) eine Lenkregelgröße (MZ, δ_{SBW}) überlagert wird, die in Abhängigkeit von den Ausgangsgrößen der mehreren Fahrsensoren ermittelt wird, sowie mit zumindest einem weiteren das Fahrverhalten des Kraftfahrzeugs beeinflussenden Regelsystem, das eine Information aus dem Lenkregelsystem verwertet, wobei dieses weitere Regelsystem insbesondere ein Bremsregelsystem (3) zum Stabilisieren der Fahrzeugstabilität durch Abbremsen einzelner Fahrzeugräder ist,
**dadurch gekennzeichnet, dass** das weitere Regelsystem aus dem Lenkregelsystem die mit der Lenkregelgröße (MZ, δ_{SBW}) überlagerte Lenkvorgabegröße (ML, δₛₒₗₗ) verwertet.

6. Lenkhilfesystem bei nach Anspruch 5,
**dadurch gekennzeichnet, dass** das Bremsregelsystem (3) durch die mit der Lenkregelgröße (MZ, δ_{SBW}) überlagerte Lenkvorgabegröße (ML, δₛₒₗₗ) angesteuert wird.

7. Lenkhilfesystem nach Anspruch 5 oder 6,
**dadurch gekennzeichnet, dass** das Lenkregelsystem (4, 7) ein steer-by-wire-System (7) ist, bei dem die Lenkvorgabegröße (ML, δₛₒₗₗ) ein Lenksollwinkel (δₛₒₗₗ) ist und ein Lenkänderungswinkel (δ_{eff}) aus dem Lenksollwinkel (δₛₒₗₗ) und den Ausgangsgrößen (b_{y}, r) der mehreren Fahrsensoren rechnerisch bestimmt wird.

8. Lenkhilfesystem nach Anspruch 5 oder 6,
**dadurch gekennzeichnet, dass** das Lenkregelsystem (4, 7) ein Überlagerungslenkungssystem (4) ist, bei dem die Lenkvorgabegröße (ML, δₛₒₗₗ) ein über eine mechanische Lenksäule übertragenes Lenksolldrehmoment (ML) ist und die Lenkregelgröße (MZ, δ_{SBW}) ein durch ein Überlagerungsgetriebe (5) erzeugtes Lenkzusatzdrehmoment (MZ) ist.

## Claims

1. A power assisted steering method for a motor vehicle (1), comprising a steering arrangement for the input of a set steering variable (ML, δ_{desired}) by a driver (2), a plurality of travel sensors for detecting travel dynamic variables, a steering control system (4, 7) via which the set steering variable (ML, δ_{desired}) is overlapped by a steering control variable (MZ, δ_{SBW}) which is determined as a function of the output variables of the plurality of travel sensors, and at least one further control system influencing the performance of the motor vehicle and evaluating information from the steering control system, this further control system, especially, being a braking control system (3) for stabilising the vehicle stability by braking individual vehicle wheels, **characterised in that** the further control system evaluates the set steering variable (ML, δ_{desired}) overlapped by the steering control variable (MZ, δ_{SBW}) from the steering control system.

2. A power assisted steering method according to claim 1, **characterised in that** the individual vehicle wheels are braked by the braking control system (3) as a function of the set steering variable (ML, δ_{desired}) overlapped by the steering control variable (MZ, δ_{SBW}).

3. A power assisted steering method according to claim 1 or 2, **characterised in that** the set steering variable (ML, δ_{desired}) is a desired steering angle (δ_{desired}) and the steering control variable (MZ, δ_{SBW}) is a steering change angle (δ_{eff}) mathematically determined as a function of the desired steering angle (δ_{desired}) and the output values (b_{y}, r) of the plurality of travel sensors.

4. A power assisted steering method according to claim 1 or 2, **characterised in that** the set steering variable (ML, δ_{desired}) is a desired steering torque (ML) and the steering control variable (MZ, δ_{SBW}) is an additional steering torque (MZ) which overlaps the desired steering torque (ML) via an overlapping transmission (5).

5. A power assisted steering system for a motor vehicle (1), comprising a steering arrangement for inputting a set steering variable (ML, δ_{desired}) by a driver (2), a plurality of travel sensors for detecting travel dynamic variables, a steering control system (4, 7) via which the set steering control variable (ML, δ_{desired}) is overlapped by a steering control variable (MZ, δ_{SBW}) which is determined as a function of the output variables of the plurality of travel sensors, and at least one further control system influencing the performance of the motor vehicle and evaluating information from the steering control system, this further control system, especially, being a braking control system (3) for stabilising the vehicle stability by braking individual vehicle wheels, **characterised in that** the further control system evaluates the set steering variable (ML, δ_{desired}) overlapped by the steering control variable (MZ, δ_{SBW}) from the steering control system.

6. A power assisted steering system according to claim 5, **characterised in that** the braking control system (3) is actuated by the set steering variable (ML, δ_{desired}) overlapped by the steering control variable (MZ, δ_{SBW}).

7. A power assisted steering system according to claim 5 or 6, **characterised in that** the steering control system (4, 7) is a steer-by-wire system (7) in which the set steering variable (ML, δ_{desired}) is a desired steering angle (δ_{desired}) and a steering change angle (δ_{eff}) is mathematically determined from the desired steering angle (δ_{desired}) and the output variables (b_{y}, r) of the plurality of travel sensors.

8. A power assisted steering system according to claim 5 or 6, **characterised in that** the steering control system (4, 7) is an overlapping steering system (4) in which the set steering variable (ML, δ_{desired}) is a desired steering torque (ML) transmitted via a mechanical steering column and the steering control variable (MZ, δ_{SBW}) is an additional steering torque (MZ) generated by an overlapping transmission (5).

## Revendications

1. Procédé d'assistance de direction pour un véhicule automobile (1) comportant un dispositif de guidage pour introduire une grandeur de consigne de guidage (ML, δ_{cons}) par le conducteur (2), plusieurs capteurs de mouvement pour détecter des grandeurs concernant la dynamique de roulement et un système de régulation de guidage (4, 7) qui combine la grandeur de consigne de guidage (ML, δ_{cons}) à une grandeur de régulation de guidage (MZ, δ_{SBW}) et qui se détermine en fonction des grandeurs de sortie des capteurs de mouvement ainsi qu'au moins un autre système de régulation influençant le comportement de roulement du véhicule et qui exploite une information venant du système de régulation de guidage, cet autre système de régulation étant notamment le système de régulation de frein (3) pour stabiliser la tenue du véhicule en freinant certaines roues du véhicule,
**caractérisé en ce que**
l'autre système de régulation exploite dans le système de régulation de guidage, la grandeur de consigne de guidage (ML, δ_{cons}) combinée à la grandeur de régulation de guidage (MZ, δ_{SBW}).

2. Procédé d'assistance de direction selon la revendication 1,
**caractérisé en ce que**
le freinage de certaines roues du véhicule se fait par le système de régulation de frein (3) en fonction de la grandeur de consigne de guidage (ML, δ_{cons}) combinée à la grandeur de régulation de guidage (MZ, δ_{SBW}).

3. Procédé d'assistance de direction selon la revendication 1 ou 2,
**caractérisé en ce que**
la grandeur de consigne de guidage (ML, δ_{cons}) est un angle de consigne de guidage (δ_{cons}) et la grandeur de régulation de guidage (MZ, δ_{SBW}) est un angle de variation de guidage (δ_{eff}) défini par le calcul en fonction de l'angle de consigne de guidage (δ_{cons}) et des grandeurs de sortie (b_{y}, r) des différents capteurs de mouvement.

4. Procédé d'assistance de direction selon la revendication 1 ou 2,
**caractérisé en ce que**
la grandeur de consigne de direction (ML, δ_{cons}) est un couple de direction de consigne (ML) et la grandeur de régulation de direction (MZ, δ_{SBW}) est un couple de direction complémentaire (MZ) qui est combiné au couple de direction de consigne (ML) dans une transmission de combinaison (5).

5. Système de direction assistée pour un véhicule automobile (1) comportant un dispositif de direction pour introduire une grandeur de consigne de direction (ML, δ_{cons}) par le conducteur (2), plusieurs capteurs de mouvement pour saisir des grandeurs de dynamique de déplacement, un système de régulation de direction (4, 7) qui combine la grandeur de consigne de direction (ML, δ_{cons}) à une grandeur de régulation de direction (MZ, δ_{SBW}), qui est déterminée en fonction des grandeurs de sortie des différents capteurs de mouvement, ainsi qu'au moins un autre système de régulation influençant le comportement de roulement du véhicule automobile, et qui exploite une information venant du système de régulation de direction, cet autre système de régulation étant notamment un système de régulation de frein (3) pour stabiliser la stabilité du véhicule ou tenue de route en freinant certaines roues du véhicule,
**caractérisé en ce que**
l'autre système de régulation exploite dans le système de régulation de direction, la grandeur de consigne de direction (ML, δ_{cons}) combinée à la grandeur de régulation de direction (MZ, δ_{SBW}).

6. Système de direction assistée selon la revendication 5,
**caractérisé en ce que**
le système de régulation de frein (3) est commandé par la grandeur de consigne de direction (ML, δ_{cons}) combinée à la grandeur de régulation de direction (MZ, δ_{SBW}).

7. Système de direction assistée selon la revendication 5 ou 6,
**caractérisé en ce que**
le système de régulation de direction (4, 7) est un système de guidage par câble (7) dans lequel la grandeur de consigne de direction (ML, δ_{cons}) est un angle de consigne de direction (δ_{cons}) et un angle de variation de direction (δ_{eff}) déterminé à partir de l'angle de consigne de direction (δ_{cons}) et des grandeurs de sortie (b_{y}, r) de plusieurs capteurs de mouvement, pour une détermination par le calcul.

8. Système de direction assistée selon la revendication 5 ou la revendication 6,
**caractérisé en ce que**
le système de régulation de direction (4, 7) est un système de direction combinée (4) dans lequel la grandeur de consigne de direction (ML, δ_{cons}) est un couple de direction de consigne (ML) transmis mécaniquement par la colonne de direction et la grandeur de régulation de direction (MZ, δ_{SBW}) est un couple de guidage complémentaire (MZ) généré par une transmission de combinaison (5).
